# EUROPÄISCHE PATENTSCHRIFT

(11) **EP 2 893 214 B1**
(45) Veröffentlichungstag und Bekanntmachung des Hinweises auf die Patenterteilung: **09.10.2019**
(21) Anmeldenummer: 13765627.8
(22) Anmeldetag: 13.08.2013
(51) Int. Cl.: F16F 15/10, G01K 11/12, G01K 3/04, G01K 13/08

(54) **DREHMOMENTÜBERTRAGUNGSEINRICHTUNG MIT BELASTUNGSANZEIGER**
TORQUE TRANSMISSION DEVICE COMPRISING STRESS INDICATOR
DISPOSITIF DE TRANSMISSION DE COUPLE COMPORTANT UN INDICATEUR DE CHARGE

(30) Priorität: 07.09.2012 DE 102012215868
(43) Veröffentlichungstag der Anmeldung: 15.07.2015
(73) Patentinhaber: Schaeffler Technologies AG & Co. KG, 91074 Herzogenaurach (DE)
(72) Erfinder: MENDE, Hartmut, 77815 Bühl (DE)
(86) Internationale Anmeldenummer: PCT/DE2013/200121
(87) Internationale Veröffentlichungsnummer: WO 2014/037000

(56) Entgegenhaltungen:
- WO-A1-2009/070612
- WO-A1-2013/075777
- DE-A1- 19 739 517
- DE-A1-102009 034 832
- US-A- 3 964 299
- US-A- 4 889 457

## Beschreibung

Die Erfindung betrifft eine Drehmomentübertragungseinrichtung in Form eines Drehschwingungsdämpfers für einen Antriebsstrang eines Kraftfahrzeugs mit einer vorgegebenen, während des Betriebs einzuhaltenden Spezifikation.

Drehmomentübertragungseinrichtungen in Antriebssträngen von Kraftfahrzeugen, in Form eines Drehschwingungsdämpfers wie geteilte Schwungräder, Torsionsschwingungsdämpfer in Kupplungsscheiben von Reibungskupplungen, Fliehkraftpendel und andere Drehschwingungstilger, Reibungskupplungen, hydrodynamische Drehmomentwandler und deren Drehschwingungsdämpfer und dergleichen sind Spezifikationen unterworfen, die einen fehlerfreien und dauerhaften Betrieb gewährleisten sollen. Fehlfunktionen und Ausfälle von Teilen oder der gesamten Drehmomentübertragungseinrichtung sind oft darauf zurückzuführen, dass die Drehmomentübertragungseinrichtung außerhalb der Spezifikationen betrieben wurde, wobei deren Funktion grundsätzlich erhalten bleiben kann, jedoch verfrühte Fehlfunktionen oder Ausfälle auftreten können.

DE19739517 A1 offenbart eine Drehmomentübertragungseinrichtung, in welcher durch die drehbare Verbindung zwischen Ausgangsteil des Torsionsschwingungsdämpfers und Kupplungsgehäuse eine Rutschkupplung geschaffen ist.

Aufgabe der Erfindung ist daher, eine Drehmomentübertragungseinrichtung in Form eines Drehschwingungsdämpfers vorzuschlagen, bei der ein Betrieb außerhalb der Spezifikation dauerhaft detektierbar ist.

Die Aufgabe wird durch den Gegenstand des Anspruchs 1 gelöst. Die diesem untergeordneten Ansprüche geben vorteilhafte Ausführungsformen wieder.

Die vorgesehene Drehmomentübertragungseinrichtung für einen Antriebsstrang eines Kraftfahrzeugs mit einer vorgegebenen, während des Betriebs einzuhaltenden Spezifikation enthält einen eine Überschreitung einer Spezifikationsschwelle dauerhaft speichernden Belastungsanzeiger. Der Belastungsanzeiger ist auf die Art und die Qualität der zu überwachenden Spezifikation abgestimmt, mehrere Belastungsanzeiger zur dauerhaften Detektion mehrerer, beispielsweise mechanischer Arten von Überschreitungen von Spezifikationsschwellen können in einer Drehmomentübertragungseinrichtung vorgesehen sein.

In vorteilhafter Weise ist vorgesehen, den Belastungsanzeiger unabhängig von einem Funktionsablauf der Drehmomentübertragungseinrichtung anzubringen. Dies bedeutet, dass der Belastungsanzeiger zwar eine Spezifikation beziehungsweise deren Schwelle überwacht und deren Überschreitung detektiert, die Funktion der Drehmomentübertragungseinrichtung aber nicht beeinträchtigt. Der Belastungsanzeiger detektiert zumindest ein einmaliges, die Spezifikationsschwelle überschreitendes Ereignis. Alternativ oder zusätzlich kann eine kumulierte Detektion mehrerer Überschreitungen detektiert werden, indem beispielsweise die Detektion des Maßes und/oder der Anzahl der Überschreitungen durch einen oder mehrere Belastungsanzeiger vorgesehen ist.

Die vorgeschlagene Drehmomentübertragungseinrichtung ist für Drehschwingungsdämpfer vorgesehen und der Belastungsanzeiger kann beispielsweise die Betriebstemperatur, eine plastische Verformung, mechanische Beanspruchung wie Impacts und dergleichen, eine unerwünschte Kontaktierung von Bauteilen und/oder dergleichen detektieren. Beispielsweise können ausgewählte Bauteile, beispielsweise Reibeinrichtungen, Federn, Anschläge, Flanschteile, Schwungmassen und/oder dergleichen von dem Belastungsanzeiger überwacht und Überschreitungen der Spezifikationen detektiert werden.

In einer vorteilhaften Ausführungsform ist der Belastungsanzeiger zur Detektion einer Spezifikationsschwelle einer Betriebstemperatur der Drehmomentübertragungseinrichtung vorgesehen. Beispielsweise kann der Belastungsanzeiger aus einem seine Farbe irreversibel und temperaturabhängig ändernden Farbelement gebildet sein. Dies kann beispielsweise ein Farbauftrag auf ein ausgewähltes Bauteil der Drehmomentübertragungseinrichtung sein. Weiterhin kann ein Farbelement, welches temperaturabhängige Anlassfarben zeigt, beispielsweise eine Stahlmembran oder dergleichen, an einem zu überwachenden Bauteil beispielsweise aus Guss, Blech oder einem Schmiedeteil angebracht sein.

Alternativ oder zusätzlich können ein oder mehrere Belastungsanzeiger zur Detektion einer Spezifikationsschwelle einer plastischen Verformung und/oder zur Detektion eines Materialrisses an einem oder mehreren Bauteilen der Drehmomentübertragungseinrichtung vorgesehen sein. Beispielsweise kann hierzu ein entsprechender Belastungsanzeiger aus einem Dehnelement mit auf die Spezifikationsschwelle abgestimmtem Elastizitätsmodul ausgebildet sein. Anhand einer nachträglichen metrischen Vermessung und/oder Untersuchungen von plastischen Dehnungen oder Rissen kann hierbei eine Überschreitung der vorgegebenen Spezifikationsschwelle ermittelt werden. Des Weiteren können Belastungsanzeiger in Form von mechanischen Elementen mit Sollbruchstellen vorgesehen sein, bei denen bei mechanisch über einer vorgegebenen Spezifikationsschwelle auftretenden Belastungen ein mechanisches Element des Belastungsanzeigers unter Druck-, Zug- Torsions- und/oder Scherbelastung reißt.

Alternativ oder zusätzlich können ein oder mehrere Belastungsanzeiger zur Detektion einer Spezifikationsschwelle einer nicht vorgesehenen Kontaktierung von Bauteilen vorgesehen sein. Hierzu können beispielsweise Belastungsanzeiger aus plastisch verformbarem Material mit abhängig von einer über einer als Kraftschwelle vorgesehenen Spezifikationsschwelle vorgegebenen Festigkeit gebildet sein. Beispielsweise kann durch Eindrucktiefe und Eindruckform eines plastisch verformten Materials ein Kontakt zwischen zwei Bauteilen auch qualitativ beurteilt werden.

## Patentansprüche

1. Drehmomentübertragungseinrichtung in Form eines Drehschwingungsdämpfers für einen Antriebsstrang eines Kraftfahrzeugs mit einer vorgegebenen, während des Betriebs einzuhaltenden Spezifikation, **dadurch gekennzeichnet, dass** in der Drehmomentübertragungseinrichtung zumindest ein eine Überschreitung einer Spezifikationsschwelle dauerhaft speichernder Belastungsanzeiger vorgesehen ist.

2. Drehmomentübertragungseinrichtung nach Anspruch 1, **dadurch gekennzeichnet, dass** der zumindest eine Belastungsanzeiger unabhängig von einem Funktionsablauf der Drehmomentübertragungseinrichtung vorgesehen ist.

3. Drehmomentübertragungseinrichtung nach Anspruch 1 oder 2, **dadurch gekennzeichnet, dass** der zumindest eine Belastungsanzeiger zur Detektion zumindest eines einmaligen die Spezifikationsschwelle überschreitenden Ereignisses vorgesehen ist.

4. Drehmomentübertragungseinrichtung nach einem der Ansprüche 1 bis 3, **dadurch gekennzeichnet, dass** der zumindest eine Belastungsanzeiger zur Detektion einer Spezifikationsschwelle einer Betriebstemperatur der Drehmomentübertragungseinrichtung vorgesehen ist.

5. Drehmomentübertragungseinrichtung nach Anspruch 4, **dadurch gekennzeichnet, dass** der zumindest eine Belastungsanzeiger aus einem seine Farbe irreversibel und temperaturabhängig ändernden Farbelement gebildet ist.

6. Drehmomentübertragungseinrichtung nach einem der Ansprüche 1 bis 5, **dadurch gekennzeichnet, dass** der zumindest eine Belastungsanzeiger zur Detektion einer Spezifikationsschwelle einer plastischen Verformung vorgesehen ist.

7. Drehmomentübertragungseinrichtung nach einem der Ansprüche 1 bis 6, **dadurch gekennzeichnet, dass** der zumindest eine Belastungsanzeiger zur Detektion eines Materialrisses vorgesehen ist.

8. Drehmomentübertragungseinrichtung nach Anspruch 6 oder 7, **dadurch gekennzeichnet, dass** der zumindest eine Belastungsanzeiger aus einem Dehnelement mit auf die Spezifikationsschwelle abgestimmtem Elastizitätsmodul gebildet ist.

9. Drehmomentübertragungseinrichtung nach einem der Ansprüche 1 bis 8, **dadurch gekennzeichnet, dass** der zumindest eine Belastungsanzeiger zur Detektion einer Spezifikationsschwelle einer nicht vorgesehenen Kontaktierung von Bauteilen vorgesehen ist.

10. Drehmomentübertragungseinrichtung nach Anspruch 9, **dadurch gekennzeichnet, dass** der zumindest eine Belastungsanzeiger aus plastisch verformbarem Material mit abhängig von einer über einer als Kraftschwelle vorgesehenen Spezifikationsschwelle vorgegebenen Festigkeit ausgebildet ist.

## Claims

1. Torque transmission device in the form of a torsional vibration damper for a drive train of a motor vehicle having a predefined specification to be observed during operation, **characterized in that** at least one loading indicator which stores exceeding of a specification threshold permanently is provided in the torque transmission device.

2. Torque transmission device according to Claim 1, **characterized in that** the at least one loading indicator is provided independently of a functional process of the torque transmission device.

3. Torque transmission device according to Claim 1 or 2, **characterized in that** the at least one loading indicator is provided for the detection of at least one singular event which exceeds the specification threshold.

4. Torque transmission device according to one of Claims 1 to 3, **characterized in that** the at least one loading indicator is provided for the detection of a specification threshold of an operating temperature of the torque transmission device.

5. Torque transmission device according to Claim 4, **characterized in that** the at least one loading indicator is formed from a colour element which changes its colour in an irreversible and temperature-dependent manner.

6. Torque transmission device according to one of Claims 1 to 5, **characterized in that** the at least one loading indicator is provided for the detection of a specification threshold of a plastic deformation.

7. Torque transmission device according to one of Claims 1 to 6, **characterized in that** the at least one loading indicator is provided for the detection of a material crack.

8. Torque transmission device according to Claim 6 or 7, **characterized in that** the at least one loading indicator is formed from an expansion element with a modulus of elasticity which is adapted to the specification threshold.

9. Torque transmission device according to one of Claims 1 to 8, **characterized in that** the at least one loading indicator is provided for the detection of a specification threshold of unintended contact of components.

10. Torque transmission device according to Claim 9, **characterized in that** the at least one loading indicator is configured from plastically deformable material with a strength which is predefined in a manner which is dependent on a via a specification threshold which is provided as a force threshold.

## Revendications

1. Dispositif de transfert de couple sous la forme d'un amortisseur d'oscillations de torsion pour une chaîne cinématique d'un véhicule automobile comprenant une spécification prédéfinie devant être respectée pendant le fonctionnement, **caractérisé en ce qu'**au moins un indicateur de charge stockant de manière durable un dépassement d'un seuil de spécification est prévu dans le dispositif de transfert de couple.

2. Dispositif de transfert de couple selon la revendication 1, **caractérisé en ce que** l'au moins un indicateur de charge est prévu indépendamment d'un déroulement du fonctionnement du dispositif de transfert de couple.

3. Dispositif de transfert de couple selon la revendication 1 ou 2, **caractérisé en ce que** l'au moins un indicateur de charge est prévu pour détecter au moins un événement unique dépassant le seuil de spécification.

4. Dispositif de transfert de couple selon l'une quelconque des revendications 1 à 3, **caractérisé en ce que** l'au moins un indicateur de charge est prévu pour détecter un seuil de spécification d'une température de fonctionnement du dispositif de transfert de couple.

5. Dispositif de transfert de couple selon la revendication 4, **caractérisé en ce que** l'au moins un indicateur de charge est formé à partir d'un élément coloré dont la couleur varie de manière irréversible et en fonction de la température.

6. Dispositif de transfert de couple selon l'une quelconque des revendications 1 à 5, **caractérisé en ce que** l'au moins un indicateur de charge est prévu pour détecter un seuil de spécification d'une déformation plastique.

7. Dispositif de transfert de couple selon l'une quelconque des revendications 1 à 6, **caractérisé en ce que** l'au moins un indicateur de charge est prévu pour détecter une rupture de matériau.

8. Dispositif de transfert de couple selon la revendication 6 ou 7, **caractérisé en ce que** l'au moins un indicateur de charge est formé à partir d'un élément extensible ayant un module d'élasticité adapté au seuil de spécification.

9. Dispositif de transfert de couple selon l'une quelconque des revendications 1 à 8, **caractérisé en ce que** l'au moins un indicateur de charge est prévu pour détecter un seuil de spécification d'un contact non prévu entre des composants.

10. Dispositif de transfert de couple selon la revendication 9, **caractérisé en ce que** l'au moins un indicateur de charge est réalisé à partir d'un matériau déformable plastiquement avec une solidité prédéfinie en fonction d'un via un seuil de spécification prévu en tant que seuil de force.
